# EUROPÄISCHE PATENTANMELDUNG

(11) **EP 1 688 303 A1**
(43) Veröffentlichungstag der Anmeldung: **09.08.2006**
(21) Anmeldenummer: 06005585.2
(22) Anmeldetag: 22.07.2003
(51) Int. Cl.: B60R 7/08, B60P 7/08

(54) **Befestigungssystem für Zubehörteile**

(30) Priorität: 07.08.2002 DE 10236077
(62) Teilanmeldung aus: 03016484.2
(71) Anmelder: Adam Opel GmbH, 65423 Rüsselsheim (DE)
(72) Erfinder: Steinbach, Markus, 55234 Wahlheim (DE); Ziegler, Hendrik, 64347 Griesheim (DE)
(74) Vertreter: Strauss, Peter

(57) **Zusammenfassung**

Erfindungsgegenstand ist ein Befestigungssystem zur Befestigung eines Zubehörteils (11) in einem Kraftfahrzeug, mit einer am Kraftfahrzeug montierten Trägerschiene (1) und einem mit dem Zubehörteil (11) verbundenen Befestigungskopf (56). Die Trägerschiene (1) hat in zwei entgegengesetzten Richtungen abstehende Rippen (2; 3), und der Befestigungskopf (56) weist zwei die Rippen umgreifende Halteklauen (53; 54) auf. Die Halteklauen (53; 54) sind durch einen elastischen Bereich (52) des Befestigungskopfs (56) verbunden und durch eine elastische Verformung dieses Bereichs (52) auseinander bewegbar.

## Beschreibung

Erfindungsgegenstand ist ein Befestigungssystem zur Befestigung eines Zubehörteils in einem Kraftfahrzeug, mit einer am Kraftfahrzeug montierten Trägerschiene und einem mit dem Zubehörteil verbundenen Befestigungskopf.

Die deutsche Offenlegung DE 100 47 542 A1 offenbart einen Laderaum für ein Kraftfahrzeug mit mehreren längs und quer verlaufenden Schienen, die in Seitenverkleidungen des Laderaumes zumindest teilweise räumlich integriert sind. Diese Schienen übernehmen Befestigungs- oder Haltefunktionen für im Laderaum positionierte Funktionsteile, die an den Schienen befestigt sind. Die Schienen können dazu mit Befestigungsrastern, mit Stütz- oder Auflagefunktionen versehen sein und liegen an gegenüberliegenden Seitenverkleidungen des Laderaumes paarweise gegenüber. Bei den Funktionsteilen handelt es sich um horizontale Decklagen oder um vertikale Funktionsteile wie Trenn- oder Sicherungsgitter oder -netze, die steife Rahmenelemente aufweisen, deren Enden in sich jeweils paarweise gegenüberliegende Schienen eingreifen. Eine variable Befestigung eines Funktionsteils an nur einer Schiene ist nicht vorgesehen.

In die Schienen können zwar Haken integriert sein, die die Aufhängung von Gegenständen an nur einer Schiene erlauben; diese sind jedoch an den Schienen nicht frei platzierbar.

In der DE 199 41 714 C2 ist eine Haltevorrichtung in einem Kraftfahrzeug mit einer am Kraftfahrzeug montierten Trägerschiene und einem mit dem Zubehörteil verbundenen Befestigungskopf beschrieben, bei der ein Band an seinen Enden Haken aufweist, die durch Einhängen in jeweils eine schlitzartige Ausnehmung einer Profilschiene lösbar mit zwei gegenüberliegenden Profilschienen verbunden sind. Auch bei dieser Ausgestaltung der Befestigungsanordnung sind für das Zustandekommen einer sicheren Befestigung zwei Profilschienen notwendig. Zudem bedarf es einer Zugkraft des Bandes, mit der das Band auf die Profilschienen wirkt. Neben der Notwendigkeit zweier Profilschienen eignet sich eine solche Befestigungsanordnung außerdem nicht für zu befestigende Gegenstände, die eine derartige Zugkraft nicht ausüben können.

Eine Haltevorrichtung nach dem Oberbegriff des Anspruchs 1 ist aus US 4 992 015 A bekannt. Der Befestigungsknopf ist an der Schiene mit Hilfe einer Schraube feststellbar, die in eine Gewindebohrung des Befestigungskopfes eingreift und eine Öse trägt, an der ein Zubehörteil befestigbar ist. Die Spitze der Schraube dreht sich beim Feststellen und Lösen in Kontakt mit der Schiene und neigt dazu, an der Schiene Spuren zu hinterlassen, die nach längerer Benutzung die Schiene unansehnlich werden lassen. Außerdem ist das Feststellen und Lösen der Schraube durch Drehen langwierig.

Aus EP 1 216 884 A2 ist eine Haltevorrichtung mit einer Schiene und einem Befestigungskopf bekannt, bei der von zwei an der Schiene angreifenden Klauen des Befestigungskopfes eine erste gegen eine Feder verschiebbar ist. Der Kopf wird befestigt, indem zunächst die zweite Feder an der Schiene eingehakt wird und dann der Kopf gegen die Schiene gedrückt wird, wobei die erste Klaue an der Schiene schleifend ausweicht, um dann hinter der Schiene einzuschnappen.

Aufgabe der vorliegenden Erfindung ist es daher, ein Befestigungssystem vorzustellen, mit dem Gegenstände lösbar, bequem und fest befestigt werden können und das wenig zur Bildung von Gebrauchsspuren neigt.

Gelöst wird die Aufgabe durch eine Befestigungsanordnung mit den Merkmalen des Anspruchs 1.

Mit der erfindungsgemäßen Befestigungsanordnung können beliebige und verschiedenste Funktionsteile wie z. B. Getränkehalter, Abdecknetze, elektrische Anschlussdosen oder Haken für Transportgegenstände und ähnliches in einem Fahrzeuginnenraum befestigt werden, ohne dass ein gleichzeitiger Eingriff in zwei gegenüberliegende Schienen erforderlich wäre.

Eine bevorzugte Weiterbildung der oben beschriebenen Ausgestaltungen der Erfindung weist einen oder zwei offene elektrische Leiter auf, die sich jeweils an einer vom Befestigungskopf abgewandten Seite der Rippen entlang der Trägerschiene erstrecken. Eine solche Weiterbildung ist dann von Vorteil, wenn mit dem Befestigungssystem elektrisch betriebene Zubehörteile befestigt werden sollen. Dabei kann bei einer Ausführungsform dieser Weiterbildung nur ein Leiter vorgesehen sein, während die Trägerschiene selber den zweiten Leiter darstellt.

Vorzugsweise ist dabei der wenigstens eine elektrische Leiter durch eine elastische Schicht von der Trägerschiene beabstandet. Bei der elastischen Schicht handelt es sich vorzugsweise um ein Elastomer, insbesondere um Weichgummi oder Moosgummi.

Zwischen dem Leiter und der elastischen Schicht ist vorzugsweise eine starre Stützschicht vorgesehen. Diese kann beispielsweise aus Kunststoff bestehen und besitzt zum einen die Aufgabe den Leiter elektrisch zu isolieren, zu positionieren sowie eventuelle punktuelle Belastungen des Leiters durch die Halteklauen auf einer größeren Fläche der darunter liegenden elastischen Schicht zu verteilen und so einer übermäßigen Verformung des Leiters vorzubeugen.

Dabei haben die Halteklauen bevorzugt zur Abnahme eines Stromes von dem oder den Leitern wenigstens einen gegenüber dem Befestigungskopf isolierten Kontakt.

Zum Berühren des wenigstens ersten Leiters steht der Kontakt vorteilhaft aus einer Kontur der jeweiligen Halteklauen hervor. Dadurch ist gewährleistet, dass nur der Kontakt und kein anderes Teil der Halteklaue den Strom führenden Leiter berühren kann. Eine Kontaktierung zwischen den Halteklauen und dem elektrischen Leiter der Trägerschiene erfolgt sofort mit dem Befestigen der Halteklauen an der Trägerschiene.

Aus Sicherheitsgründen können Mittel zum Schließen eines Stromkreises erst nach erfolgter Befestigung des Befestigungskopfes an der Trägerschiene vorgesehen sein.

Die Erfindung wird im Folgenden unter Bezugnahme auf Zeichnungen näher erläutert. Es zeigen:
- Fig. 1: einen Querschnitt durch eine Trägerschiene; und
- Fig. 2: eine Ausführung eines Befestigungskopfes gemäß einer Ausgestaltung der Erfindung.

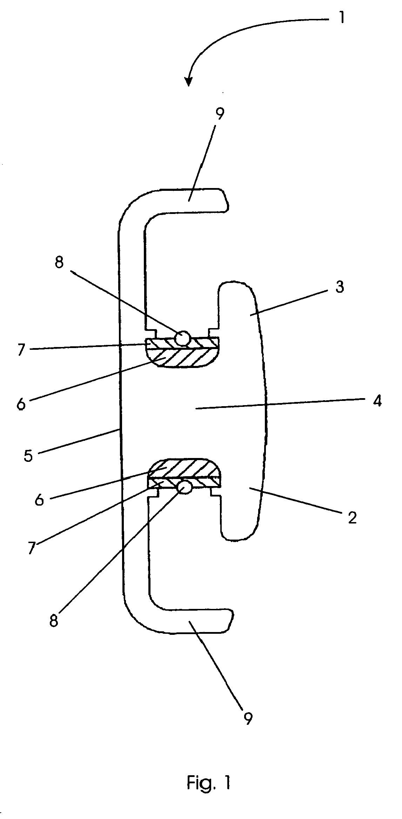

Ein Querschnitt durch eine an einem Kraftfahrzeug montierte Trägerschiene 1 ist in Fig. 1 gezeigt. Die Trägerschiene 1 verfügt über zwei von einem mittigen Steg 4 in entgegengesetzte Richtungen abstehende Rippen 2, 3. In der Darstellung der Fig. 1 weist die Rippe 2 nach unten, während die Rippe 3 nach oben gerichtet ist. Die Rippen 2, 3 gehen senkrecht von einem Ende eines Stegs 4 aus, der mit einem entgegengesetzten Ende senkrecht und mittig auf einem Bodenteil 5 mündet. Das Bodenteil 5 reicht in den Richtungen der Rippen 2, 3 über diese hinaus. Sowohl zwischen der Rippe 2 und dem Bodenteil 5 als auch zwischen der Rippe 3 und dem Bodenteil 5 wird auf diese Weise eine Hinterschneidung gebildet. In diesen Hinterschneidungen ist eine Stromversorgung bestehend aus einem Elastomerstreifen 6, einem Kunststoffstreifen 7 und einem elektrischen Leiter 8 eingelegt. Die elektrische Stromversorgung wird weiter unten näher beschrieben. Zum Schutz der Stromversorgung sind Endabschnitte 9 des Bodenteils 5 zur Seite mit den Rippen 2, 3 hin abgebogen. An dem Trägerteil 1 wird ein Zubehörteil mit einem daran verbundenen Befestigungskopf befestigt, indem die abstehenden Rippen 2 und 3 von Halteklauen des Befestigungskopfes umfasst werden.

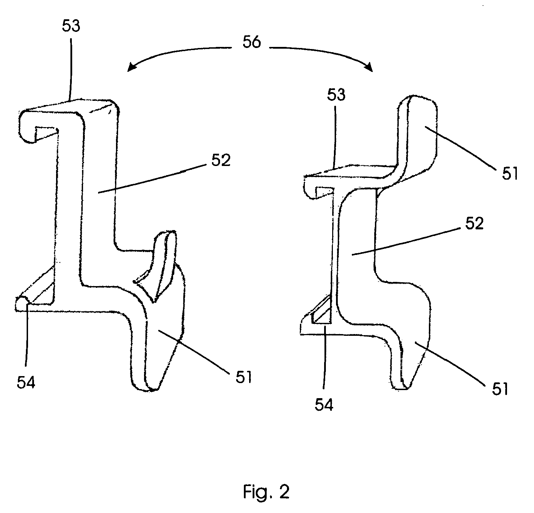

Eine Ausgestaltung eines erfindungsgemäßen Befestigungskopfes 56 ist in der Fig. 2 in zwei alternativen Ausführungen dargestellt. Bei beiden Ausführungen handelt es sich um einstückige Teile aus einem elastischen Material mit einem elastischen Mittelteil 52 zwischen Halteklauen 53 und 54. Eine Verbindung mit der Trägerschiene 1 bzw. ein Lösen von der Trägerschiene 1 geschieht durch eine elastische Verbiegung des Mittelteiles 52 zwischen den Halteklauen 53 und 54. Dabei kann die Verbindung mit der Trägerschiene 1 durch einfaches Aufdrücken des Befestigungskopfes 56 auf die Trägerschiene 1 geschehen, bei der das Mittelteil 56 verbiegt und die Halteklaue 53 an der Rippe 3 und die Halteklaue 54 an der Rippe 2 aufklipst.

Zum Lösen des Befestigungskopfes 56 von der Trägerschiene 1 ist ein Betätigungsteil 51 vorgesehen, mit dem die zum Lösen des Befestigungskopfes 55 notwendige Verbiegung des Mittelteiles 52 bewirkt werden kann. Dabei kann ein Befestigungskopf 56 entweder ein Betätigungsteil 51 wie im linken Beispiel oder mehrere Betätigungsteile 51 wie im rechten Beispiel der Fig. 2 aufweisen.

Mit dem erfindungsgemäßen Befestigungssystem lässt sich auf einfache und praktische Weise eine Stromversorgung für die Zubehörteile bewerkstelligen. Dies ist in Fig. 1 gezeigt. Darin ist zu sehen, dass zwischen der Rippe 2 und dem Bodenteil 5 sowie zwischen der Rippe 3 und dem Bodenteil 5 jeweils ein offener elektrischer Leiter 8 vorgesehen ist, der sich entlang der Trägerschiene 1 erstreckt. Dabei stellt der Leiter 8 hinter der Rippe 3 eine elektrische Masse dar, während der Leiter 8 hinter der Rippe 2 einen positiven elektrischen Pol darstellt. Durch die Anordnung des Spannung führenden Leiters in einer nach unten offenen Hinterschneidung wird ein Kurzschluss durch Fremdkörper oder Verunreinigungen weitestgehend ausgeschlossen.

Die Leiter 8 liegen dabei auf einer Grundschicht 6 auf, die aus einem Elastomer besteht. Bei der Grundschicht 6 handelt es sich vorzugsweise um Weichgummi oder Moosgummi. Zwischen der Grundschicht 6 und dem Leiter 8 befindet sich ein Streifen 7 aus einem steifen Kunststoff, in den der Leiter 8 zum Teil eingebettet ist. Durch den Streifen 7 ist der Leiter 8 zum einen elektrisch isoliert, zum anderen wird er durch ihn an einer vorgesehenen Stelle positioniert. Außerdem lassen sich durch den Kunststoff 7 eventuelle punktuelle Verformungen des Leiters 8 bei der Kontaktierung auf einer größeren Fläche verteilen.

Die Kontaktierung erfolgt dabei über die Halteklauen 53, 54, die zur Abnahme eines Stromes von den Leitern 8 über isolierte Kontakte verfügen, die gegenüber dem Befestigungskopf 56 isoliert sind. Diese Kontakte stehen dabei aus den Halteklauen 53, 54 hervor, um eine Kontaktierung mit dem Leiter 8 wirksam sicherzustellen. Da es während der Befestigung des Befestigungskopfes 56 an der Trägerschiene 1 zum Überspringen von Funken kommen kann, ist aus Sicherheitsgründen ein Schalter vorhanden, der einen Stromkreis mit dem Zubehörteil während des Befestigungsvorganges unterbindet und erst nach erfolgter Befestigung und Kontaktierung den Stromkreis schließt.

Ein solcher Schalter, der auf Seiten des Befestigungskopfes bzw. des Zubehörteils vorgesehen ist, kann manuell betätigbar sein, oder er kann mit einer vorgegebenen Verzögerung nach Erscheinen der Versorgungsspannung an seinen Eingangsklemmen automatisch schließen.

Alternativ kann ein solcher Schalter auch zwischen die Leiter 8 und eine sie versorgende Batterie des Kraftfahrzeugs eingefügt sein. Ein automatischer Schalter dieser Art kann z.B. den Stromfluss über die Leiter 8 überwachen und die Spannung zwischen den Leitern 8 auf einen niedrigen Wert und/oder einen hohen Innenwiderstand regeln, wenn der Stromfluss nahe Null ist, und mit einer Verzögerung die Spannung auf die Batterienennspannung hoch oder den Innenwiderstand hinunterregeln, sobald auf einen angeschlossenen Verbraucher hinweisender Stromfluss durch die Leiter 8 erfasst wird.

### B e z u g s z e i c h e n l i s t e

- 1.: Trägerschiene
- 2.: Rippe
- 3.: Rippe
- 4.: Steg
- 5.: Bodenteil
- 6.: Elastomer
- 7.: Kunststoff
- 8.: elektrischer Leiter
- 9.: Endabschnitt
- 51.: Betätigungsteil
- 52.: Mittelteil
- 53.: Halteklaue
- 54.: Halteklaue
- 55.:
- 56.: Befestigungskopf

## Patentansprüche

1. Befestigungssystem zur Befestigung eines Zubehörteils (11) in einem Kraftfahrzeug, mit einer am Kraftfahrzeug montierten Trägerschiene (1) und einem mit dem Zubehörteil (11) verbundenen Befestigungskopf (10; die Trägerschiene (1) in zwei entgegengesetzten Richtungen abstehende Rippen (2; 3) trägt und der Befestigungskopf (56) zwei die Rippen umgreifende Halteklauen aufweist, **dadurch gekennzeichnet, dass** die Halteklauen (53; 54) durch einen elastischen Bereich (52) des Befestigungskopfs (56) verbunden und durch eine elastische Verformung dieses Bereichs (52) auseinander bewegbar sind.

2. Befestigungssystem nach Anspruch 1, **gekennzeichnet durch** einen oder zwei offene elektrische Leiter (8), die sich jeweils an einer vom Befestigungskopf (10; 55; 56) abgewandten Seite der Rippen (2; 3) entlang der Trägerschiene (1) erstrecken.

3. Befestigungssystem nach Anspruch 2, **dadurch gekennzeichnet, dass** der wenigstens eine elektrische Leiter (8) durch eine elastische Schicht (6) von der Trägerschiene (1) beabstandet ist.

4. Befestigungssystem nach Anspruch 3, **dadurch gekennzeichnet, dass** es sich bei der elastischen Schicht (6) um ein Elastomer, vorzugsweise um Weichgummi oder Moosgummi, handelt.

5. Befestigungssystem nach einem der Ansprüche 3 oder 4, **gekennzeichnet durch** eine starre Stützschicht (7) zwischen dem Leiter (8) und der elastischen Schicht (6).

6. Befestigungssystem nach einem der Ansprüche 2 bis 5, **dadurch gekennzeichnet, dass** die Halteklauen (53; 54) zur Abnahme eines Stromes von den Leitern (8) gegenüber dem Befestigungskopf (56) isolierte Kontakte haben.

7. Befestigungssystem nach einem der Ansprüche 2 bis 6, **dadurch gekennzeichnet, dass** ein Kontakt zum Berühren des wenigstens ersten Leiters (8) aus einer Kontur der Halteklauen (53; 54) hervorsteht.

8. Befestigungssystem nach einem der Ansprüche 2 bis 7, **gekennzeichnet durch** Mittel zum Schließen eines Stromkreises erst nach erfolgter Befestigung des Befestigungskopfes (56) an der Trägerschiene (1).
